# EUROPEAN PATENT SPECIFICATION

(11) **EP 4 006 304 B1**
(45) Date of publication and mention of the grant of the patent: **27.12.2023**
(21) Application number: 21210883.1
(22) Date of filing: 26.11.2021
(51) Int. Cl.: F01D 5/20

(54) **TURBINE BLADE FOR A GAS TURBINE ENGINE AND GAS TURBINE ENGINE**
TURBINENLAUFSCHAUFEL FOR EIN GASTURBINENTRIEBWERK UND GASTURBINENTRIEBWERK
AUBE ROTORIQUE POUR UN MOTEUR À TURBINE À GAZ ET MOTEUR À TURBINE À GAZ

(30) Priority: 26.11.2020 US 202017105583
(43) Date of publication of application: 01.06.2022
(73) Proprietor: PRATT & WHITNEY CANADA CORP., Longueuil, Québec J4G 1A1 (CA)
(72) Inventor: LECUYER, Daniel, (01BE5) Longueuil, J4G 1A1 (CA); LEGHZAOUNI, Othmane, (01BE5) Longueuil, J4G 1A1 (CA)
(74) Representative: Dehns

(56) References cited:
- EP-A1- 2 944 764
- EP-A1- 3 255 249

## Description

### TECHNICAL FIELD

The invention relates generally to gas turbine engines, and more particularly to blades used in turbine sections of such engines in accordance with the independent claims. The invention treats from a turbine blade for a gas turbine engine and from a gas turbine engine.

### BACKGROUND OF THE ART

A turbine blade used in a gas turbine engine has a radially outward blade tip that rotates at high speed relative to a peripheral shroud defining a gaspath of the engine. Maintaining a minimal gap between the blade tip and the peripheral shroud is important to maintain efficiency.

A tip of an internally cooled turbine blade is cooled with cooling air exhausted through openings in the tip. The turbine blade tips are exposed to high gas temperature and mechanical forces imposed by the high rotation speed. Thermo-mechanical fatigue life of the airfoil and blade tips in particular can determine the repair cycle of an engine which may involve removal and replacement of turbine blades. Improvement is desirable to reduce the costs and delays involved with engine downtime caused by thermo-mechanical fatigue of turbine blade tips.

EP 3,255,249 discloses a gas turbine engine blade including a squealer tip pocket and discloses the preamble of claim 1.

EP 2,944,764 discloses a component, a corresponding gas turbine engine and a method of cooling, and discloses the preamble of claim 1.

### SUMMARY

According to a first aspect of the present invention, there is provided a turbine blade for a gas turbine engine, comprising: an airfoil extending along a span from a base to a tip and along a chord from a leading edge to a trailing edge, the airfoil having a pressure side and a suction side, a tip pocket at the tip of the airfoil, the tip pocket at least partially surrounded by a peripheral tip wall defining a portion of the pressure and suction sides; at least one internal cooling passage in the airfoil, the at least one internal cooling passage having at least one outlet communicating with the tip pocket; and a reinforcing bump located on the pressure side of the airfoil and protruding from a baseline surface of the peripheral tip wall to a bump end located into the tip pocket, the reinforcing bump overlapping a location where a curvature of a concave portion of the pressure side of the airfoil is maximal.

Optionally, and in accordance with the above, a thickness of the peripheral tip wall at the reinforcing bump corresponds to a nominal thickness of the peripheral tip wall at a location adjacent the reinforcing bump plus a bump thickness of the reinforcing bump.

Optionally, and in accordance with any of the above, the tip pocket is bounded by the peripheral tip wall and by a bottom wall, the bottom wall extending from the pressure side to the suction side, the bump extending from the bottom wall to the tip.

Optionally, and in accordance with any of the above, a ratio of the thickness to the nominal thickness is between 1.5 and 2.5.

Optionally, and in accordance with any of the above, the ratio of the thickness to the nominal thickness is about 1.75.

Optionally, and in accordance with any of the above, a chordwise position of a center of the reinforcing bump is between chordwise positions of two outlets of the at least one outlet.

Optionally, and in accordance with any of the above, a width of the reinforcing bump taken in a direction along the chord of the airfoil is about 10% of the chord of the airfoil.

Optionally, and in accordance with any of the above, the reinforcing bump is located closer to the leading edge than to the trailing edge.

Optionally, and in accordance with any of the above, a center of the reinforcing bump is located at from 15% to 25% of the chord from the leading edge.

Optionally, and in accordance with any of the above, the bump end is spaced apart from the suction side.

Optionally, and in accordance with any of the above, the bump end of the reinforcing bump is closer to the baseline surface than to the suction side.

According to another aspect of the present invention, there is provided a gas turbine engine in accordance with claim 12.

Optionally, and in accordance with the above, the turbine section includes a high-pressure turbine and a low-pressure turbine, the rotor being part of the high-pressure turbine, the rotor being a single rotor of the high-pressure turbine.

Optionally, and in accordance with any of the above, a ratio of the thickness to the nominal thickness is between 1.5 and 2.5.

### DESCRIPTION OF THE DRAWINGS

Reference is now made to the accompanying figures in which:
Fig. 1 is a schematic cross sectional view of a gas turbine engine;
Fig. 2 is a top three dimensional view of a blade of a turbine section of the engine of Fig. 1 in accordance with one embodiment;
Fig. 3 is a three dimensional view of a blade of the turbine section of the engine of Fig. 1 in accordance with another embodiment;
Fig. 4 is an enlarged view of a tip of the blade of Fig. 3;
Fig. 5 is an enlarged view of a portion of Fig. 4;
Fig. 6 is a top view showing a portion of a tip of the blade of Fig. 3; and
Fig. 7 is a top view of the tip of the blade of Fig. 3.

### DETAILED DESCRIPTION

In at least some of the figures that follow, some elements appear more than once (e.g. there may be two, three, etc. of a given part in a given embodiment). Accordingly, only a first instance of each given element may be labeled, to maintain clarity of the figures.

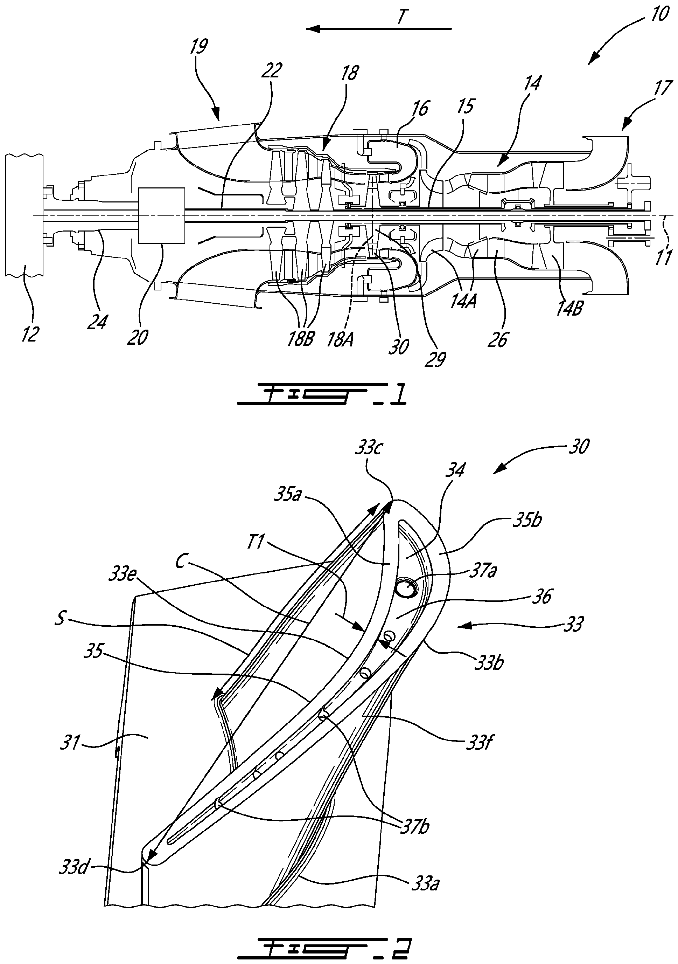

Fig. 1 illustrates a gas turbine engine 10 of a type preferably provided for use in subsonic flight for driving a load 12, such as, but not limited to, a propeller or a helicopter rotor. Depending on the intended use, the engine 10 may be any suitable aircraft engine. In the present embodiment, the engine 10 is a gas turbine engine, and more particularly a turboprop, and generally comprises in serial flow communication a compressor section 14 for pressurizing the air, a combustor 16 in which the compressed air is mixed with fuel and ignited for generating an annular stream of hot combustion gases, and a turbine section 18 for extracting energy from the combustion gases.

The exemplary embodiment shown in Fig. 1 is a "reverse-flow" engine because gases flow within an annular gaspath 26 from an inlet 17, at a rear portion of the engine 10, to an exhaust outlet 19, at a front portion of the engine 10, relative to a direction of travel T of the engine 10. This is in contrast to "through-flow" gas turbine engines in which gases flow through the core of the engine 10 from a front portion to a rear portion, in a direction opposite the direction of travel T. The engine 10 may be a reverse-flow engine (as illustrated) or a through-flow engine. The principles of the present disclosure can be applied to both reverse-flow and through-flow engines and to any other gas turbine engines, such as a turbofan engine and a turboshaft engine.

In the illustrated embodiment, the turbine section 18 has a high-pressure turbine 18A in driving engagement with a high-pressure compressor 14A. The high-pressure turbine 18A and the high-pressure compressor 14A are mounted on a high-pressure shaft 15. The turbine section 18 has a low-pressure turbine, also known as power turbine 18B drivingly engaged to the load 12. The power turbine 18B is drivingly engaged to a low-pressure compressor 14B via a low-pressure shaft 22. A gearbox 20, which may be a planetary gearbox, is configured as a reduction gearbox and operatively connects the low-pressure shaft 22 that is driven by the power turbine 18B to a shaft 24 that is in driving engagement with the load 12, while providing a reduction speed ratio therebetween. In the present embodiment, the load 12 is a rotor of an aircraft, and more particularly a propeller, and thus the shaft 24 driving the aircraft rotor is referred to as a rotor shaft.

It should be noted that the terms "upstream" and "downstream" used herein refer to the direction of an air/gas flow passing through the annular gaspath 26 of the gas turbine engine 10. It should also be noted that the term "axial", "radial", "angular" and "circumferential" are used with respect to a central axis 11 of the gaspath 26, which may also be a central axis of gas turbine engine 10. It should also be noted that expressions such as "extending radially" as used herein does not necessarily imply extending perfectly radially along a ray perfectly perpendicular to the central axis 11, but is intended to encompass a direction of extension that has a radial component relative to the central axis 11.

Referring to Figs. 1-2, the high-pressure turbine 18a includes a rotor having a central hub 29 and a peripheral array of replaceable turbine blades 30. Any of the rotors of any of the high-pressure turbine 18a and the low-pressure turbine 18b may include blades as will be described herein below. In the embodiment shown, the disclosed turbine blades 30 are part of the high-pressure turbine 18a, which, in the present case, includes a single rotor.

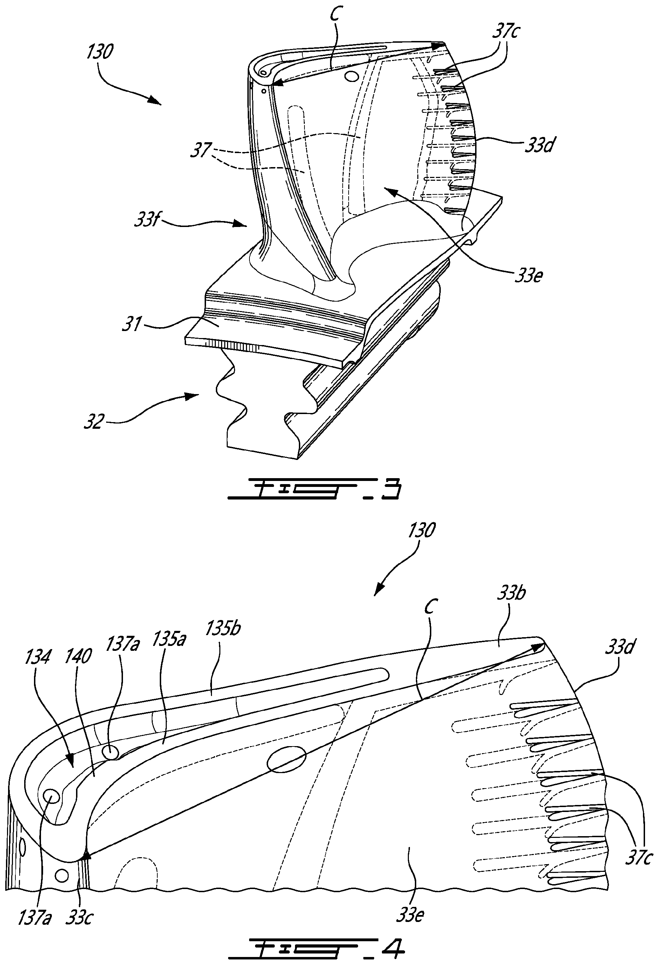

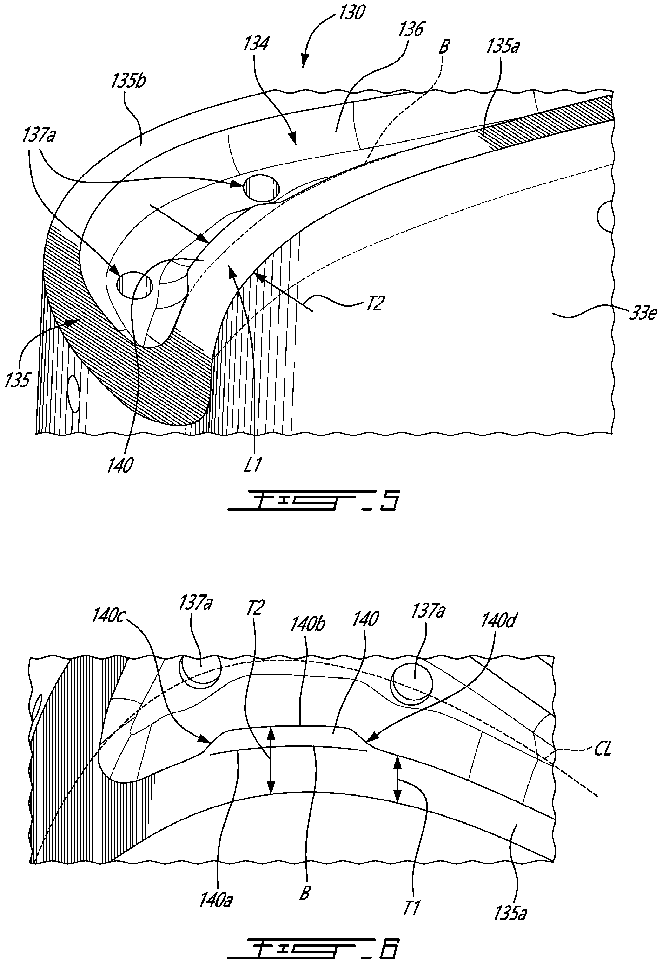

Referring more particularly to Fig. 2, the blade 30 has a platform 31 exposed to the annular gaspath 26 and a root 32 (Fig. 3) protruding inwardly from the platform 31. The root 32 is received within correspondingly shaped slots defined by the central hub 29 (Fig. 1) to hold the blade 30 while the rotor is rotating about the central axis 11. The blade 30 has an airfoil 33 protruding from the platform 31 away from the root 32 along a span S. The airfoil 33 has a base 33a at the platform 31 and a tip 33b radially spaced apart from the root 33a relative to the central axis 11. The airfoil 33 hence extends along a direction having a radial component relative to the central axis 11 from the base 33a to the tip 33b. The airfoil 33 has a leading edge 33c, a trailing edge 33d spaced apart from the leading edge 33c by a chord C (Fig. 4), a pressure side 33e and a suction side 33f opposed to the pressure side 33e. The pressure and suction sides 33e, 33f extend from the leading edge 33c to the trailing edge 33d and from the base 33a to the tip 33b. The chord C is depicted here as a straight line connecting the leading edge 33c to the trailing edge 33d. The chord C may vary along the span S of the airfoil 33 between the base 33a and the tip 33b. The chord C differs from a camber line CL (Fig. 6), which corresponds to a line that may be curved and that connects the leading edge 33c to the trailing edge 33d and that is centered between the pressure and suctions sides 33e, 33f. In the present disclosure, when values are expressed in function of the chord (e.g., 10% of the chord C), the chord C is the one taken at a corresponding spanwise location (e.g., tip 33b) between the base 33a and the tip 33b.

The blade 30 has a tip pocket, also referred to as tip plenum, 34 circumscribed by a peripheral tip wall 35. The peripheral tip wall 35 defines a portion of the pressure side 33e and a portion of the section side 33f. The blade has an end wall which defines a bottom wall 36 of the tip plenum. The bottom wall 36 extends from the pressure side 33e to the suction side 33f. The tip pocket 34 is therefore substantially bounded by the peripheral tip wall 35 and the bottom wall 36. The blade 30 defines internal cooling passages 37 (only one cooling passage may be present) (Fig. 3) within the airfoil 33. The cooling passages 37 have tip outlets 37a, 37b communicating with the tip pocket 34 and side outlets 37c located between the base 33a and the tip 33b proximate the trailing edge 33d and through the pressure and/or suction sides 33e, 33f. The tip outlets 37a, 37b may differ by their diameter and, hence, by a mass flow rate of cooling air flowing therethrough. In the embodiment shown, the tip outlets 37a, 37b includes a first tip outlet 37a proximate the leading edge 33c of the airfoil 33 and a plurality of second tip outlets located between the first tip outlet 37a and the trailing edge 33d. The first and second tip outlets 37a, 37b are distributed along a camber line of the airfoil between the leading edge 33c and the trailing edge 33d. Diameters of the second tip outlets 37b decrease from the leading edge 33c to the trailing edge 33d because of a distance between the pressure and suction sides 33e, 33f decreases toward the trailing edge 33d. They may have a constant diameter. A density of the second tip outlets 37b may increase toward the trailing edge 33d to compensate for their smaller diameter. The cooling air may come from the compressor section 14 (Fig. 1) of the gas turbine engine 10. Many factors are involved in determining the position and size of the tip outlets: pressure distribution between the inside of the blade and the outside, the flow structure (orientation, etc) inside the blade, etc.

In use, the rotor of the high-pressure turbine 18a of the turbine section 18 rotates at high speed about the central axis 11. The pressure of the combustion gases at the pressure side 33e of the airfoil 33 is greater than that at the suction side 33f of the airfoil 33. This tends to induce a phenomenon known as "tip leakage" where the combustion gases tend to flow from the pressure side 33e to the suction side 33f of the airfoil 33 around the tip 33b. This may impair efficiency of the turbine section 18 because the turbine section 18 is not able to extract as much energy from the combustion gases as it could if no tip leakage were present. To deter the combustion gases to flow around the tip 33b of the airfoil 33, the peripheral tip wall 35 is created. That is, the peripheral tip wall 35 has a pressure side portion 35a and a suction side portion 35b spaced apart from the pressure side portion 35a by the pocket 34. The pressure and suction sides portions 35a, 35b of the peripheral tip wall 35 act as knife edges of a labyrinth seal and contributes in decreasing an amount of the combustion gases that flows within a gap between the tip 33b of the airfoil 33 and turbine shrouds circumferentially distributed around the blades 30 compared to a configuration in which the tip pocket 34 is absent. In other words, implementing the tip pocket 34 creates two knife edges, which corresponds here as the pressure and suction sides portions 35a, 35b of the peripheral tip wall 35. These pressure and suction side portions 35a, 35b of the peripheral tip wall 35 create a sealing engagement with the surrounding turbine shrouds. An amount of the combustion gases flowing from the pressure side 33e to the suction side 33f around the tip 33b may therefore be decreased by the implementation of the peripheral tip wall 35 and tip pocket 34 for a constant tip clearance.

However, a thickness T1 of the peripheral tip wall 35 may be quite small. In the embodiment shown, the thickness T1 is about 0.02 inch (0.05 cm). Some locations of the peripheral tip wall 35 are simultaneously exposed to the hot combustion gases flowing through the turbine section 18 and to the cooler cooling air from the internal cooling passages 37 and exiting into the tip pocket 34. Hence, some locations of the peripheral tip wall 35 are subjected to strong temperature gradients. With time, these strong temperature gradients may expose the blade 30 to thermal mechanical fatigue (TMF) and may shorten the lifespan of the blades 30. Frequency of costly downtimes required to replace the blades 30 may therefore be increased. This may be undesired.

Moreover, if the blade 30 is used into the high-pressure turbine 18a of the turbine section 18, it will be exposed to the hottest temperatures since the high-pressure turbine 18a is immediately downstream of the combustor 16. In the embodiment shown, the high-pressure turbine 18a includes only a single rotor. Hence, the amount of work extracted from the combustion gases by the single rotor of the high-pressure turbine 18a is very high and, consequently, so are the temperature gradients the blades 30 of this single rotor are exposed to. This may enhance the TMF phenomenon described above.

The inventors of the present application noticed that some locations on the peripheral tip wall 35 may be more susceptible than other to TMF. For instance, an area on the pressure side portions 35a of the peripheral tip wall 35 is located where high thermal flux are present. The suction side portion 35b of the peripheral tip wall 35 may be seen as being shielded. Moreover, it has been further observed by the inventors of the present application that portions of the peripheral tip wall 35 that are closest to the first and second tip outlet 37a, 37b of the cooling passages 37 are more prone to high temperature gradients because the cooling air flowing within the pocket 34 is the coldest near the first and second tip outlets 37a, 37b defined through the bottom wall 36. Moreover, the inventors of the present application observed that a location of the peripheral tip wall 35 aligned with a location L1 (Fig. 5) where a curvature of a concave portion of the pressure side 33e of the airfoil 33 is maximal may be more prone to TMF. More specifically, TMF and curvature are related to other blade mechanical stresses from rotational forces that may create bending, and global thermal effects. These stresses and thermal effects may be amplified by the higher curvature of the airfoil. This stress component may be a driver for TMF.

Referring to Figs. 3-6, a blade in accordance with another embodiment is shown at 130. The blade 130 may be used as part of the high-pressure turbine 18a of the turbine section 18 of the engine 10. The blade 130 may be used in any of the rotors of the turbine section 18 of the engine 10. Features of the blade 130 that are described below may at least partially alleviate the aforementioned drawbacks.

The blade 130 has a tip pocket 134 bounded by a peripheral tip wall 135 and by a bottom wall 136. Outlets 137a of the cooling passages 37 are defined through the bottom wall 136 to supply the tip pocket 134 with cooling air. In order to decrease the thermal gradients discussed above, a reinforcing bump 140 is defined by the peripheral tip wall 135. The reinforcing bump 140 locally increases a thickness of the peripheral tip wall 135. In other words, the reinforcing bump 140 corresponds to a section of the peripheral tip wall 135 having a greater thickness than a nominal thickness of the peripheral tip wall 135 on opposite sides of the reinforcing bump 140. This increase in thickness may allow to increase stiffness of the peripheral tip wall 135 and may allow to decrease thermal gradients therein because of the added material.

In the illustrated embodiment, the reinforcing bump 140 extends from the pressure side portion 135a of the peripheral tip wall 135 into the tip pocket 134. The reinforcing bump 140 is located at the location L1 where high thermal flux are present on the blade 130 The location L1 is located on the pressure side 33e of the airfoil 33. As illustrated in Fig. 5, the reinforcing bump 140 is located between two first outlets 137a of the cooling passages 37. The two first outlets 137a are disposed linearly along the camber line CL of the airfoil 33. In the present embodiment, the two first outlets 137a are centered on the camber line CL. Diameters of the two first outlets 137a are substantially equal to one another. The two first outlets 137a are the first tip outlets of the blade 130 starting from the leading edge 33c toward the trailing edge 33d. Second tip outlets 37b (Fig. 2) are located between the first tip outlets 137a and the trailing edge 33d. As illustrated in Fig. 6, a chordwise position of a center of the reinforcing bump 140 is between chordwise positions of the first two tip outlets 137a starting from the leading edge 33c. In the depicted embodiment, the reinforcing bump 140 overlaps a location where a curvature of a concave portion of the pressure side 33e of the airfoil is maximal.

As illustrated in Figs. 5-6, the reinforcing bump 140 protrudes from a baseline surface B of the pressure side portion 135a of the peripheral tip wall 135 from a bump root 140a to a bump end 140b. The reinforcing bump 140 may be made of a different material secured (i.e., welded) to the peripheral tip wall 35. The reinforcing bump 140 may be made of a welded element of the same material as a remainder of the blade 130 or of another compatible alloy. In the present case, the reinforcing bump 140 monolithically protrudes from the baseline surface B of the peripheral tip wall 35. As shown in Fig. 6, the bump end 140b is spaced apart from the suction side portion 135b of the peripheral tip wall 135. That is, in the depicted embodiment, the reinforcing bump 140 does not extend fully across the tip pocket 134. In other words, the suction side 33f of the airfoil 33 is free from direct connection to the reinforcing bump 140.

Particularly, in the illustrated embodiment, the reinforcing bump 140 does not extend past the camber line CL of the airfoil 33 at the tip 33b. The two outlets 137a may be substantially centered between the pressure and suction sides 33e, 33f and may be aligned on the camber line CL. That is, the reinforcing bump 140 does not intersect an imaginary straight line connecting together the two outlets 137a.

In the embodiment shown, a center of the reinforcing bump 140 is located at from 15% to 25% of the chord C from the leading edge 33c. A width of the reinforcing bump 140 taken in a direction along the chord C from a fore end 140c to a rear end 140d is about 10% of the chord C. In the present case, the reinforcing bump 140 is located closer to the leading edge 33c than to the trailing edge 33d. The reinforcing bump 140 extends from the bottom wall 136 to the tip 33b of the airfoil 33. That is, a radial height of the reinforcing bump 140 is the same as that of the peripheral tip wall 135.

In the embodiment shown, the thickness T2 of the peripheral tip wall 135 at the reinforcing bump 140 (more specifically, the thickness T2 of the peripheral tip wall 135 at the bump end 140b of the reinforcing bump 140 at an intermediate section between its fore and rear ends 140c, 140d) is greater than the nominal thickness T1 of the peripheral tip wall 135. The nominal thickness T1 may correspond to the thickness of the peripheral tip wall 135 on opposite sides of the reinforcing bump 140. Should the peripheral tip wall 135 on opposite sides of the reinforcing bump 140 comprise different thicknesses, the nominal thickness T1 corresponds to the greater of these two thicknesses. A ratio of the thickness T2 at the reinforcing bump 140 to the nominal thickness T1 is between about 1.5 and about 2.5. In the embodiment shown, the ratio of the thickness T2 at the reinforcing bump 140 to the nominal thickness T1 is 1.75. In the present case, the thickness T1 at the reinforcing bump 140 is about 0.035 inch (0.089 cm).

In the present case, the reinforcing bump 140 includes solely one bump. That is, the blade 130 may be free from other bump. A thickness of the peripheral tip wall 135 may be substantially constant but for the reinforcing bump 140. In a particular embodiment, the tip wall thickness is .020 inch (0.05 cm) and may vary from 0.013 to 0.033 inch (0.033 to 0.084 cm). However, the thickness of the wall at the baseline surface B on which the reinforcing bump 140 is located may have a thickness of 0.02 inch (0.05 cm) plus or minus 0.003 inch (0.0076 cm). That is, the thickness of the wall at the baseline surface may range from 0.017 inch to 0.023 inch (0.043 cm to 0.058 cm). The reinforcing bump 140 may be 0.015 inch (0.038 cm) proud from the baseline surface B and may vary by plus or minus 0.006 inch (0.015 cm). That is, from 0.009 inch to 0.021 inch (0.023 cm to 0.053 cm). In a particular embodiment, a thickness of the reinforcing bump 140 may vary along its length. That is, the reinforcing bump 140 may be non uniform in thickness.

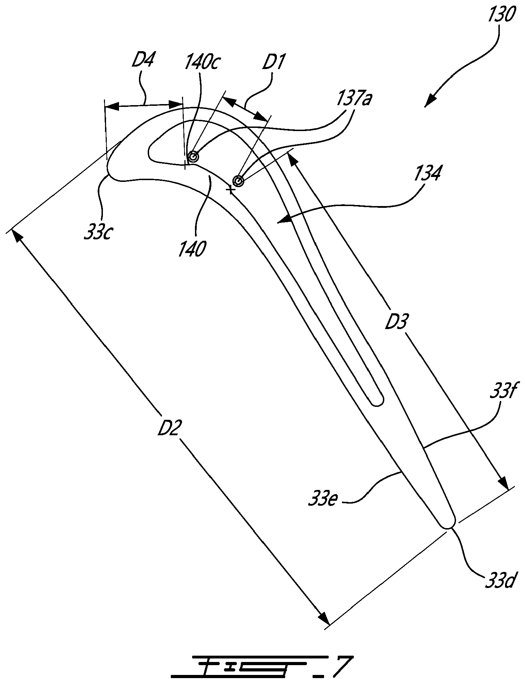

Referring now to Fig. 7, a ratio of a distance D1 between the first two tip outlets 137a to a distance D2 between a forward-most point of the tip of the blade 130 and the trailing edge 33d of the tip of the blade 130 may be about 0.10. A ratio of a distance D3 between a rearward-most one of the first two tip outlets 137a and the trailing edge 33d to the distance D2 between the forward-most point of the tip of the blade 130 and the trailing edge 33d is about 0.79. A ratio of a distance D4 between the fore end 140c of the reinforcing bump 140 and the leading edge 33c to the distance D2 between the forward-most point of the tip of the blade 130 and the trailing edge 33d is about 0.15. Herein, "about" imply a variation of plus or minus 10%.

The durability of the blade 130 including the peripheral tip wall 135 may be increased by the reinforcing bump 140. The reinforcing bump 140, by protruding into the tip pocket 134, may avoid any change to the external airfoil geometry and with a negligible weight increase. Accordingly the thermo-mechanical fatigue life of the blade 130 may be addressed by addition of the reinforcing bump 140 in accordance with the example described above and shown in the drawings.

This present disclosure introduces a local thickening of the peripheral tip wall, which may reduce the thermal gradient and may reduce the nominal stress. This may lead to an improvement in TMF life at the location of the added thickness. Since the air inside the tip pocket 134 is a resultant of tip leakage and core cooling air exhausted through the outlets of the cooling passages, and because of thermal conductivity, the wall surface temperature on the tip pocket side is lower than the wall surface temperature on the pressure side of the blade. The combination of environmental stresses and the stress caused by the described thermal difference results in high local stresses at specific locations along this wall. The increased thickness may spread the temperature difference over a larger area, and may allow for better conduction of heat out of that area. This may reduce the gradient and improve the TMF life.

In the present disclosure, the expression "about" means that a value may vary by 10% of the value. For instance, about 10 implies that the value varies from 9 to 11.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A turbine blade (130) for a gas turbine engine (10), comprising:
an airfoil (33) extending along a span (S) from a base (33a) to a tip (33b) and along a chord (C) from a leading edge (33c) to a trailing edge (33d), the airfoil (33) having a pressure side (33e) and a suction side (33f),
a tip pocket (134) at the tip (33b) of the airfoil (33), the tip pocket (134) at least partially surrounded by a peripheral tip wall (135) defining a portion of the pressure and suction sides (33e, 33f);
at least one internal cooling passage (37) in the airfoil, the at least one internal cooling passage (37) having at least one outlet (137a) communicating with the tip pocket (134); and
a reinforcing bump (140) located on the pressure side (33e) of the airfoil (33) and protruding from a baseline surface (B) of the peripheral tip wall (135) to a bump end (140b) located into the tip pocket (134),
**characterized in** the reinforcing bump (140) overlapping a location (L1) where a curvature of a concave portion of the pressure side (33e) of the airfoil (33) is maximal.

2. The turbine blade (130) of claim 1, wherein a thickness (T2) of the peripheral tip wall (135) at the reinforcing bump (140) corresponds to a nominal thickness (T1) of the peripheral tip wall (135) at a location adjacent the reinforcing bump (140) plus a bump thickness of the reinforcing bump (140).

3. The turbine blade (130) of claim 2, wherein a ratio of the thickness (T2) of the peripheral tip wall (135) at the reinforcing bump (140) to the nominal thickness of the peripheral tip wall (135) is between 1.5 and 2.5.

4. The turbine blade (130) of claim 3, wherein the ratio of the thickness (T2) of the peripheral tip wall (135) at the reinforcing bump (140) to the nominal thickness (T1) of the peripheral tip wall (135) is about 1.75.

5. The turbine blade (130) of any preceding claim, wherein the tip pocket (134) is bounded by the peripheral tip wall (135) and by a bottom wall (136), the bottom wall (136) extending from the pressure side (33e) to the suction side (33f), the reinforcing bump (140) extending from the bottom wall (136) to the tip (33b).

6. The turbine blade (130) of any preceding claim, wherein a chordwise position of a center of the reinforcing bump (140) is between chordwise positions of two outlets (137a) of the at least one outlet (137a).

7. The turbine blade (130) of any preceding claim, wherein a width of the reinforcing bump (140) taken in a direction along the chord (C) of the airfoil (33) is about 10% of the chord (C) of the airfoil (33).

8. The turbine blade (130) of any preceding claim, wherein the reinforcing bump (140) is located closer to the leading edge (33c) than to the trailing edge (33d).

9. The turbine blade (130) of claim 8, wherein a center of the reinforcing bump (140) is located at from 15% to 25% of the chord (C) from the leading edge (33c).

10. The turbine blade (130) of any preceding claim, wherein the bump end (140b) is spaced apart from the suction side (33f).

11. The turbine blade (130) of any preceding claim, wherein the bump end (140b) of the reinforcing bump (140) is closer to the baseline surface (B) than to the suction side (33f).

12. A gas turbine engine (10), comprising a turbine section (18) having a rotor, the rotor having a central hub (29) and blades (30) secured to the central hub (29) and distributed about a central axis (11), each of the blades (30) comprising the turbine blade of any preceding claim, wherein:
the peripheral tip wall (135) extends from a bottom wall (36) to the tip (33b) of the airfoil (33);
the at least one internal cooling passage (37) is hydraulically connected to a source of a cooling fluid; and
the reinforcing bump (140) locally increases a thickness (T2) of the peripheral tip wall (135) beyond a nominal thickness (T1) of the peripheral tip wall (135), the reinforcing bump (140) ending into the tip pocket (135) and distanced from the leading edge (33c) by about 15% of the chord (C) or more.

13. The gas turbine engine (10) of claim 12, wherein the turbine section (18) includes a high-pressure turbine (18A) and a low-pressure turbine (18B), the rotor being a single rotor of the high-pressure turbine (18A).

## Patentansprüche

1. Turbinenlaufschaufel (130) für ein Gasturbinentriebwerk (10), umfassend:
ein Schaufelblatt (33), das sich entlang einer Spannweite (S) von einer Basis (33a) zu einer Spitze (33b) und entlang einer Sehne (C) von einer Vorderkante (33c) zu einer Hinterkante (33d) erstreckt, wobei das Schaufelblatt (33) eine Druckseite (33e) und eine Saugseite (33f) aufweist,
eine Spitzentasche (134) an der Spitze (33b) des Schaufelblatts (33), wobei die Spitzentasche (134) zumindest teilweise von einer peripheren Spitzenwand (135) umgeben ist, die einen Abschnitt der Druck- und Saugseite (33e, 33f) definiert;
mindestens einen inneren Kühlkanal (37) in dem Schaufelblatt, wobei der mindestens eine innere Kühlkanal (37) mindestens einen Auslass (137a) aufweist, der mit der Spitzentasche (134) in Verbindung steht; und
einen Verstärkungsbuckel (140), der sich auf der Druckseite (33e) des Schaufelblatts (33) befindet und von einer Basisfläche (B) der peripheren Spitzenwand (135) zu einem Buckelende (140b) vorragt, das sich in der Spitzentasche (134) befindet,
**dadurch gekennzeichnet, dass**
der Verstärkungsbuckel (140) eine Stelle (L1) überlappt, an der die Krümmung eines konkaven Abschnitts der Druckseite (33e) des Schaufelblatts (33) maximal ist.

2. Turbinenlaufschaufel (130) nach Anspruch 1, wobei die Dicke (T2) der peripheren Spitzenwand (135) an dem Verstärkungsbuckel (140) der Nenndicke (T1) der peripheren Spitzenwand (135) an einer Stelle neben dem Verstärkungsbuckel (140) plus einer Buckeldicke des Verstärkungsbuckels (140) entspricht.

3. Turbinenlaufschaufel (130) nach Anspruch 2, wobei das Verhältnis zwischen der Dicke (T2) der peripheren Spitzenwand (135) an dem Turbinenlaufschaufel (140) und der Nenndicke der peripheren Spitzenwand (135) zwischen 1,5 und 2,5 beträgt.

4. Turbinenlaufschaufel (130) nach Anspruch 3, wobei das Verhältnis zwischen Dicke (T2) der peripheren Spitzenwand (135) an dem Verstärkungsbuckel (140) und der Nenndicke (T1) der peripheren Spitzenwand (135) etwa 1,75 beträgt.

5. Turbinenlaufschaufel (130) nach einem der vorhergehenden Ansprüche, wobei die Spitzentasche (134) durch die periphere Spitzenwand (135) und eine Bodenwand (136) begrenzt wird, wobei sich die Bodenwand (136) von der Druckseite (33e) zu der Saugseite (33f) erstreckt und der Verstärkungsbuckel (140) sich von der Bodenwand (136) zu der Spitze (33b) erstreckt.

6. Turbinenlaufschaufel (130) nach einem der vorhergehenden Ansprüche, wobei die Sehnenposition der Mitte des Verstärkungsbuckels (140) zwischen den Sehnenpositionen der beiden Auslässe (137a) des mindestens einen Auslasses (137a) liegt.

7. Turbinenlaufschaufel (130) nach einem der vorhergehenden Ansprüche, wobei die Breite des Verstärkungsbuckels (140) in einer Richtung entlang der Sehne (C) des Schaufelblatts (33) etwa 10 % der Sehne (C) des Schaufelblatts (33) beträgt.

8. Turbinenlaufschaufel (130) nach einem der vorhergehenden Ansprüche, wobei der Verstärkungsbuckel (140) näher an der Vorderkante (33c) als an der Hinterkante (33d) angeordnet ist.

9. Turbinenlaufschaufel (130) nach Anspruch 8, wobei die Mitte des Verstärkungsbuckels (140) um 15 % bis 25 % der Sehne (C) von der Vorderkante (33c) entfernt ist.

10. Turbinenlaufschaufel (130) nach einem der vorhergehenden Ansprüche, wobei das Buckelende (140b) von der Saugseite (33f) beabstandet ist.

11. Turbinenlaufschaufel (130) nach einem der vorhergehenden Ansprüche, wobei das Buckelende (140b) des Verstärkungsbuckels (140) näher an der Basisfläche (B) als an der Saugseite (33f) liegt.

12. Gasturbinentriebwerk (10), umfassend einen Turbinenabschnitt (18), der einen Rotor aufweist, wobei der Rotor eine zentrale Nabe (29) und Laufschaufeln (30) aufweist, die an der zentralen Nabe (29) befestigt und um eine zentrale Achse (11) verteilt sind, wobei jede der Laufschaufeln (30) die Turbinenlaufschaufel nach einem der vorhergehenden Ansprüche umfasst, wobei:
die periphere Spitzenwand (135) sich von einer Bodenwand (36) zu der Spitze (33b) des Schaufelblatts (33) erstreckt;
der mindestens eine innere Kühlkanal (37) hydraulisch mit einer Kühlflüssigkeitsquelle verbunden ist; und
der Verstärkungsbuckel (140) eine Dicke (T2) der peripheren Spitzenwand (135) lokal über eine Nenndicke (T1) der peripheren Spitzenwand (135) hinaus vergrößert, wobei der Verstärkungsbuckel (140) in der Spitzentasche (135) endet und von der Vorderkante (33c) um etwa 15 % der Sehne (C) oder mehr entfernt ist.

13. Gasturbinentriebwerk (10) nach Anspruch 12, wobei der Turbinenabschnitt (18) eine Hochdruckturbine (18A) und eine Niederdruckturbine (18B) umfasst und der Rotor ein einzelner Rotor der Hochdruckturbine (18A) ist.

## Revendications

1. Aube rotorique (130) pour un moteur à turbine à gaz (10), comprenant :
un profil aérodynamique (33) se prolongeant le long d'une envergure (S) depuis une base (33a) jusqu'à une pointe (33b) et le long d'une corde (C) depuis un bord d'attaque (33c) jusqu'à un bord de fuite (33d), le profil aérodynamique (33) présentant un intrados (33e) et un extrados (33f),
une poche de pointe (134) au niveau de la pointe (33b) du profil aérodynamique (33), la poche de pointe (134) au moins partiellement entourée par une paroi de pointe périphérique (135) définissant une partie des intrados et extrados (33e, 33f) ;
au moins un passage de refroidissement interne (37) dans le profil aérodynamique, l'au moins un passage de refroidissement interne (37) présentant au moins une sortie (137a) communiquant avec la poche de pointe (134) ; et
une bosse de renforcement (140) située sur l'intrados (33e) du profil aérodynamique (33) et faisant saillie depuis une surface de base (B) de la paroi de pointe périphérique (135) jusqu'à une extrémité de bosse (140b) située dans la poche de pointe (134), **caractérisée en ce que** la bosse de renforcement (140) chevauche un emplacement (L1) où une courbure d'une partie concave de l'intrados (33e) du profil aérodynamique (33) est maximale.

2. Aube rotorique (130) selon la revendication 1, dans laquelle une épaisseur (T2) de la paroi de pointe périphérique (135) au niveau de la bosse de renforcement (140) correspond à une épaisseur nominale (T1) de la paroi de pointe périphérique (135) au niveau d'un emplacement adjacent à la bosse de renforcement (140) plus une épaisseur de bosse de la bosse de renforcement (140) .

3. Aube rotorique (130) selon la revendication 2, dans laquelle un rapport de l'épaisseur (T2) de la paroi de pointe périphérique (135) au niveau de la bosse de renforcement (140) à l'épaisseur nominale de la paroi de pointe périphérique (135) est compris entre 1,5 et 2,5.

4. Aube rotorique (130) selon la revendication 3, dans laquelle le rapport de l'épaisseur (T2) de la paroi de pointe périphérique (135) au niveau de la bosse de renforcement (140) à l'épaisseur nominale (T1) de la paroi de pointe périphérique (135) est d'environ 1,75.

5. Aube rotorique (130) selon une quelconque revendication précédente, dans laquelle la poche de pointe (134) est délimitée par la paroi de pointe périphérique (135) et par une paroi inférieure (136), la paroi inférieure (136) se prolongeant depuis l'intrados (33e) jusqu'à l'extrados (33f), la bosse de renforcement (140) se prolongeant depuis la paroi inférieure (136) jusqu'à la pointe (33b).

6. Aube rotorique (130) selon une quelconque revendication précédente, dans laquelle une position dans le sens de la corde d'un centre de la bosse de renforcement (140) se trouve entre des positions dans le sens de la corde de deux sorties (137a) de l'au moins une sortie (137a).

7. Aube rotorique (130) selon une quelconque revendication précédente, dans laquelle une largeur de la bosse de renforcement (140) prise dans une direction le long de la corde (C) du profil aérodynamique (33) est d'environ 10 % de la corde (C) du profil aérodynamique (33).

8. Aube rotorique (130) selon une quelconque revendication précédente, dans laquelle la bosse de renforcement (140) est située plus près du bord d'attaque (33c) que du bord de fuite (33d) .

9. Aube rotorique (130) selon la revendication 8, dans laquelle un centre de la bosse de renforcement (140) est situé au niveau de 15 % à 25 % par rapport à la corde (C) depuis le bord d'attaque (33c) .

10. Aube rotorique (130) selon une quelconque revendication précédente, dans laquelle l'extrémité de bosse (140b) est espacée de l'extrados (33f).

11. Aube rotorique (130) selon une quelconque revendication précédente, dans laquelle l'extrémité de bosse (140b) de la bosse de renforcement (140) est plus proche de la surface de base (B) que de l'extrados (33f).

12. Moteur à turbine à gaz (10), comprenant une section de turbine (18) présentant un rotor, le rotor présentant un moyeu central (29) et des aubes (30) fixées au moyeu central (29) et réparties autour d'un axe central (11), chacune des aubes (30) comprenant l'aube rotorique selon une quelconque revendication précédente, dans lequel :
la paroi de pointe périphérique (135) s'étend depuis une paroi inférieure (36) jusqu'à la pointe (33b) du profil aérodynamique (33) ;
l'au moins un passage de refroidissement internes (37) est relié hydrauliquement à une source d'un fluide de refroidissement ; et
la bosse de renforcement (140) augmente localement une épaisseur (T2) de la paroi de pointe périphérique (135) au-delà d'une épaisseur nominale (T1) de la paroi de pointe périphérique (135), la bosse de renforcement (140) se terminant dans la poche de pointe (135) et éloignée du bord d'attaque (33c) d'environ 15 % de la corde (C) ou plus.

13. Moteur à turbine à gaz (10) selon la revendication 12, dans lequel la section de turbine (18) comporte une turbine haute pression (18A) et une turbine basse pression (18B), le rotor étant un rotor unique de la turbine haute pression (18A).
